# EUROPEAN PATENT APPLICATION

(11) **EP 4 763 941 A1**
(43) Date of publication of application: **24.06.2026**
(21) Application number: 24315589.2
(22) Date of filing: 18.12.2024
(51) Int. Cl.: C09J 191/00, C09D 7/20, C10G 3/00

(54) **BIODEGRADABLE HYDROCARBON FLUIDS AS SOLVENTS FOR ADHESIVES AND SEALANTS**

(71) Applicant: TotalEnergies OneTech, 92400 Courbevoie (FR)
(72) Inventor: Swoboda, Benjamin, 69360 Solaize (FR); Perumalsamy, Jayachandran, 400710 Mumbai (IN); Khanra, Sipra, 400710 Mumbai (IN); Crozet, Delphine, 69360 Solaize (FR)
(74) Representative: August Debouzy

(57) **Abstract**

The invention is directed to the use of a composition as a solvent for adhesives and/or sealants, the composition comprising a paraffinic fluid and at least one alcohol, the composition having a content of biocarbon of at least 90%wt based on the total weight of the carbon atoms of the composition,
the paraffinic fluid comprising, based on the total weight of the paraffinic fluid, at least 90% by weight of paraffinic compounds and having a weight ratio isoparaffins/n-paraffins of at least 2. The invention also relates to a composition as such.

## Description

### FIELD OF THE INVENTION

The present invention relates to the use of a bio-based composition as a solvent for adhesives and sealants applications.

The invention also relates to a bio-based composition.

### BACKGROUND ART

Adhesive techniques are well-known and are increasingly used in a great variety of applications including the automotive industry, construction and building. These techniques are also of particular interest to the wood/timber, furnishing, leather goods, packaging and electronic industries.

Hydrocarbon solvents are used to dissolve various types of binders and polymers and can also help to control the drying properties of adhesive solvents.

Solvents of fossil origin are generally used in sealant and adhesive compositions.

Professional are increasing seeking to replace products of fossil origin by biosourced products (which are not of fossil origin).

An aim of the invention is to implement the sustainability into solvents used in adhesives and sealants. The present invention aims at providing solvents of biological origin having satisfying performance, in particular solvency, for their use in adhesives and sealants.

### SUMMARY OF THE INVENTION

The invention relates to the use of a composition as a solvent for adhesives and/or sealants, the composition comprising a paraffinic fluid and at least one alcohol, the composition having a content of biocarbon of at least 90%wt based on the total weight of the carbon atoms of the composition,
the paraffinic fluid comprising, based on the total weight of the paraffinic fluid, at least 90% by weight of paraffinic compounds and having a weight ratio isoparaffins/n-paraffins of at least 2.

The invention may have one or several of the following characteristics:
- the composition comprises:
   - from 70 to 99%wt, preferably from 85 to 95% by volume, of a paraffinic fluid, and
   - from 1 to 30%wt, preferably from 5 to 15% by volume, of alcohol(s),
   based on the total volume of the composition;
- the alcohol has from 4 to 18 carbon atoms, preferably from 5 to 12 carbon atoms and/or the alcohol(s) is(are) selected from aliphatic monoalcohol(s);
- the alcohols are selected from pentanol, hexanol, heptanol, octanol nonanol, decanol, and mixtures thereof, preferably from n-heptanol, 2-octanol, and mixtures thereof;
- the paraffinic fluid has an initial boiling point and a final boiling point in the range from 100°C to 250°C, preferably from 120 to 220°C;
- the paraffinic fluid comprises:
   - From 60 to 95%wt, preferably from 70 to 90%wt, of isoparaffins,
   - From 5 to 40%wt, preferably from 10 to 30%wt, of n-paraffins,
   based on the total weight of the paraffinic fluid;
- the composition has a final boiling point below 250°C, preferably an initial boiling point and a final boiling point in the range from 100°C to 250°C, preferably from 120 to 220°C;
- the composition has an aniline point of at least 30°C, preferably at least 45°C, more preferably from 50°C to 80°C;
- the composition has an initial boiling point and a final boiling point in the range from 120°C to 220°C and comprises:
   - from 85 to 95%vol, of a paraffinic fluid, and
   - from 5 to 15%vol, of alcohol(s),

   based on the total volume of the composition,
   the paraffinic fluid having an initial boiling point and a final boiling point in the range from 120°C to 220°C and comprising:
      - from 70 to 90%wt of isoparaffins,
      - from 10 to 30%wt of n-paraffins,
      - Less than 1%wt of naphthens,
      - Less than 500 ppm by weight of aromatics,
   based on the total weight of the paraffinic fluid;

The invention is also directed to a composition, typically suitable to be used as a solvant for adhesive and/or sealants, having a final boiling point below 250°C and comprising:
- from 70 to 99%vol, preferably from 85 to 95%vol, of a paraffinic fluid, and
- from 1 to 30%vol, preferably from 5 to 15%vol, of alcohol(s),

based on the total volume of the composition,
the composition having a content of biocarbon of at least 90%wt based on the total weight of the carbon atoms of the composition,
the paraffinic fluid comprising, based on the total weight of the paraffinic fluid, at least 90% by weight of paraffinic compounds and having a weight ratio isoparaffins/n-paraffins of at least 2.

The composition of the invention may have one or several of the following characteristics:
- the paraffinic fluid has one or more of the following features:
   - the paraffinic fluid comprises:
      - from 60 to 95%wt, preferably from 70 to 90%wt, of isoparaffins,
      - from 5 to 40%wt, preferably from 10 to 30%wt, of n-paraffins,
      based on the total weight of the paraffinic fluid, and/or
   - the paraffinic fluid has an initial boiling point and a final boiling point in the range from 100°C to 250°C, preferably from 120 to 220°C;
- the alcohol(s) has(have) from 4 to 18 carbon atoms, preferably from 5 to 12 carbon atoms and/or the alcohol(s) is(are) selected from aliphatic monoalcohol(s);
- the alcohols are selected from pentanol, hexanol, heptanol, octanol nonanol, decanol, and mixtures thereof, preferably from n-heptanol, 2-octanol, and mixtures thereof;
- the composition has an aniline point of at least 30°C, preferably at least 45°C, more preferably from 50°C to 80°C, and/or
- the composition has an initial boiling point and a final boiling point in the range from 100°C to 250°C, preferably from 120 to 220°C, and/or
- the composition has an initial boiling point and a final boiling point in the range from 120°C to 220°C and comprises:
   - from 85 to 95%vol, of a paraffinic fluid, and
   - from 5 to 15%vol, of alcohol(s),

   based on the total volume of the composition,
   the paraffinic fluid having an initial boiling point and a final boiling point in the range from 120°C to 220°C and comprising:
      - from 70 to 90%wt of isoparaffins,
      - from 10 to 30%wt of n-paraffins,
      - Less than 1%wt of naphthens,
      - Less than 500 ppm by weight of aromatics,
   based on the total weight of the paraffinic fluid.

The invention is also directed to a process for preparing the composition according to the invention, the process comprising the steps of:
- hydrodeoxygenating and hydroisomerizing a used biomass, preferably a used cooking oil, in order to obtain a hydrodeoxygenated and hydroisomerized used biomass, preferably a hydrodeoxygenated and hydroisomerized used cooking oil,
- catalytically hydrogenating the hydrodeoxygenated and hydroisomerized used biomass preferably at a temperature from 80 to 180°C, at a pressure from 50 to 160 bars, a liquid hourly space velocity of 0.2 to 5 hr-1 and an hydrogen treat rate up to 200 Nm3/ton of feed, to obtain a paraffinic fluid,
- mixing the paraffinic fluid with at least one alcohol,
process wherein preferably the used biomass is a used cooking oil more preferably selected from used vegetable oils, used animal fats, used fish oils, and mixtures thereof, preferably from used vegetable oils, preferably the used cooking oil is chosen among rapeseed oil, canola oil, colza oil, tall oil, sunflower oil, soybean oil, hemp oil, olive oil, linenseed oil, mustard oil, palm oil, arachis oil, castor oil, coconut oil, animal fats such as suet, tallow, blubber, recycled alimentary fats and a mixture threof.

The present invention allows to reduce the carbon footprint and introduce a sustainable base oil from a renewable resource, compared to fluids from fossil origin.

The present invention also allows to provide a bio-sourced composition derived from non-fossil oils acting as a solvent for adhesives and sealants, the bio-sourced composition exhibiting a target aniline point, notably of about 55-75°C, for improved solvency performances for the target applications (adhesive and sealants).

The present invention thus allows to provide similar or even better performances than existing petroleum-based solvents for the same application.

### DESCRIPTION OF EMBODIMENTS OF THE INVENTION

A first object of the present invention is the use of a composition as a solvent for adhesives and/or sealants, the composition comprising a paraffinic fluid and at least one alcohol,
the composition having a content of biocarbon of at least 90%wt based on the total weight of the carbon atoms of the composition,
the paraffinic fluid comprising, based on the total weight of the paraffinic fluid, at least 90% by weight of paraffinic compounds and having a weight ratio isoparaffins/n-paraffins of at least 2.

### Paraffinic fluid

The composition of the invention comprises a paraffinic fluid. The paraffinic fluid comprises at least 90% by weight of paraffinic compounds and a weight ratio isoparaffins/n-paraffins of at least 2.

According to the present invention, "paraffinic compounds" refer to isoparaffins and n-paraffins.

The term "isoparaffins" refers to branched saturated non-cyclic alkyles.

The term "n-paraffins" refers to linear saturated non-cyclic alkyles.

The paraffinic fluid comprises at least 90% by weight of paraffinic compounds, preferably at least 95%wt of paraffinic compounds, based on the total weight of the paraffinic fluid.

The paraffinic fluid has a weight ratio isoparaffins/n-paraffins of at least 2, preferably at least 3.

According to an embodiment, the paraffinic fluid comprises:
- From 60 to 95%wt, preferably from 70 to 90%wt, of isoparaffins,
- From 5 to 40%wt, preferably from 10 to 30%wt, of n-paraffins,
based on the total weight of the paraffinic fluid.

According to an embodiment, the paraffinic fluid comprises less than 1%wt of naphthenes, preferably less than 0.5%wt of naphthenes, more preferably less than 0.1%wt of naphthenes, based on the total weight of the paraffinic fluid.

According to the present invention, naphthenes are not paraffinic compounds, and the term "naphthenes" refers to cyclic saturated aliphatic compounds.

According to an embodiment, the paraffinic fluid comprises less than 500 ppm by weight of aromatics, preferably less than 300 ppm by weight of aromatics, more preferably less than 100 ppm by weight of of aromatics, based on the total weight of the paraffinic fluid.

The contents of isoparaffins, n-paraffins and naphthenes can be measured with methods well known to those skilled in the art, for example by gas phase chromatography. The content of aromatics can be determined by UV spectrometry for example.

According to an embodiment, the paraffinic fluid has a final boiling point below 250°C, preferably an initial boiling point and a final boiling point in the range from 100°C to 250°C, more preferably from 120 to 220°C.

The initial boiling point and final boiling point can be determined according to ASTM D86.

Preferably, the difference between the final boiling point and the initial boiling point ranges from 20 to 70°C, preferably from 30 to 50°C.

in one embodiment, the paraffinic fluid of the invention comprises from 90 to 99% by weight of paraffins having from 8 to 12 carbon atoms.

According to a particular embodiment, the paraffinic fluid of the invention has a flash point lower than 90°C, preferably a flash point lower than or equal to 80°C, preferably a flash point lower than or equal to 70°C, more preferably a flash point lower than or equal to 60°C.

The flash point is measured for example in accordance with standard ASTM D93.

In one embodiment, the paraffinic fluid of the invention has a kinematic viscosity at 40°C lower than or equal to 2 mm²/s, preferably lower than or equal to 1.5 mm²/s, more preferably lower than or equal to 1 mm²/s.

The kinematic viscosity at 40°C can be measured according to standard ASTM D445.

The paraffinic fluid of the invention also preferably has an extremely low weight content of sulfur compounds, typically less than or equal to 5 ppm, preferably less than or equal to 3 ppm and more preferably less than or equal to 0.5 ppm, i.e. a level too low for detection by conventional analyzers of low sulfur content.

The paraffinic fluid of the invention comprises a biocarbon content of at least 90% by weight based on the total weight of the carbon atoms. This content is advantageously higher, in particular equal to or higher than 98% and advantageously it is 100 %.

The term « biocarbon» indicates that the carbon is of natural origin and is derived from a biomaterial as indicated below. Bio-carbon content and biological carbon content are expressions indicating the same value. A renewable carbon or biocarbon is an organic material in which the carbon is derived from recently fixed CO2 (on human scale) via photosynthesis with the atmosphere. A biomaterial (Carbon 100 % of natural origin) has a ¹⁴C /¹²C isotopic ratio greater than 10⁻¹², whilst a fossil material has a zero ratio. Isotopic ¹⁴C is formed in the atmosphere and is therefore integrated via photosynthesis on a time scale of no more than a few tens of years. The half-life of ¹⁴C is 5730 years. As a result, materials derived from photosynthesis, namely plants in general, necessarily have a maximum content of isotope ¹⁴C.

In one embodiment, the ¹⁴C/¹²C isotopic ratio of the fluid of the invention is between 1.15 x 10⁻¹² and 1.2 x 10⁻¹².

Determination of the content of biomaterial or bio-carbon can be given in accordance with standards ASTM D 6866-12, method B (ASTM D 6866-06) and ASTM D 7026 (ASTM D 7026-04). Standard ASTM D 6866 concerns « Determining the Biobased Content of Natural Range Materials Using Radiocarbon and Isotope Ratio Mass Spectrometry Analysis », whilst standard ASTM D 7026 concerns « Sampling and Reporting of Results for Determination of Biobased Content of Materials via Carbon Isotope Analysis ». The second standard mentions the first in the first paragraph thereof.

The first standard describes a test to measure the ¹⁴C/¹²C ratio of a sample and comparison with the ¹⁴C/¹²C ratio of a reference sample of 100 % renewable origin, to give a relative percentage of C of renewable origin in the sample. The standard is based on the same concept as ¹⁴C dating, but without applying dating equations. The ratio thus calculated is indicated as «pMC» (percent Modern Carbon). If the material to be analysed is a mixture of biomaterials and fossil materials (without radioactive isotope), the pMC value obtained is directly correlated with the quantity of biomaterial contained in the sample. The reference value used for ¹⁴C dating is a value dating from the 1950s. The year 1950 was chosen on account of the existence of nuclear testing in the atmosphere which sent large amounts of isotopes into the atmosphere after this date. The 1950 reference corresponds to a pMC value of 100. Having regard to thermonuclear tests, the current value to be retained is about 107.5 (which corresponds to a correction factor of 0.93). The radiocarbon signature of a plant today is therefore 107.5. A signature of 54 pMC and 99 pMC therefore corresponds to a quantity of biomaterial in the sample of 50 % and 93 % respectively.

In one particular embodiment, the paraffinic fluid of the invention has a 28-day biodegradability of at least 60%, preferably at least 70%, more preferably at least 75% and most preferably of at least 80% measured according to standard OECD 301B.

When the biodegradability at 28 days is of at least 60%, the paraffinic fluid can be named "readily biodegradable".

Biodegradation of an organic chemical product refers to reduction of the complexity of the chemical compounds through the metabolic activity of microorganisms.

The OECD 301B method is based on the measurement of the evolution of the content of CO2 in the suspension of the sample, according to the following principle:
A measured volume of a medium, containing a known concentration of test substance (10-20 mg/) as the sole nominal carbon source, is aerated in the dark or under diffused light, by passing carbon dioxide-free air at a controlled flow rate. Degradation is monitored by analysing the carbon dioxide produced over a period of 28 days. The CO2 is trapped by barium or sodium hydroxide and then is determined by titration of the hydroxide in excess or as inorganic carbon. The amount of carbon dioxide produced by the test substance (corrected by the value obtained for the control containing the inoculum) is expressed as a percentage of the (theoretical) CO2Th.

In one embodiment, the paraffinic fluid of the invention has a pour point lower than or equal to 20°C, preferably lower than or equal to 40°C, more preferably lower than or equal to 50°C, further preferably lower than or equal to 70°C, or even lower than or equal to 80°C.

The pour point can be measured according to the ASTM D5950 standard test method.

According to a particularly preferred embodiment, the paraffinic fluid of the invention has a kinematic viscosity at 40°C lower than or equal to 2 mm²/s and comprises:
- from 70 to 90%wt, of isoparaffins,
- from 10 to 30%wt, of n-paraffins,

based on the total weight of the paraffinic fluid,
wherein the total content of paraffins is of at least 95%wt based on the total weight of the paraffinic fluid.

According to a particularly preferred embodiment, the paraffinic fluid of the invention has a kinematic viscosity at 40°C lower than or equal to 2 mm²/s and comprises from 90 to 99% by weight of paraffins having from 8 to 12 carbon atoms, wherein the weight ratio isoparaffins/n-paraffins of at least 3.

According to a preferred embodiment of the invention, the paraffinic fluid represents from 70 to 99%vol, preferably from 85 to 95%vol of the total volume of the composition.

### Method for obtaining the paraffinic fluid

The paraffinic fluid of the invention is ideally derived from treatment of used materials of biological origin. The carbon of a biomaterial results from photosynthesis of plants and hence from atmospheric CO2. Degradation (by degradation it is also meant end-of-life combustion/incineration) of these materials to CO2 does not therefore contribute towards global warming since there is no increase in carbon emitted in the atmosphere. The CO2 balance of biomaterials is therefore distinctly better and contributes towards reducing the carbon footprint of the products obtained (solely the energy required for manufacture must be taken into account). On the contrary, a material of fossil origin that has degraded to CO2 will contribute towards increasing CO2 levels and hence to global warming.

The paraffinic fluid of the invention will therefore have a better carbon footprint than that of compounds obtained from a fossil source.

Also, if the paraffinic fluid is derived from used materials of biological origin, said paraffinic fluid will have a better carbon footprint than that of fluids obtained from unused materials of biological origin.

The paraffinic fluid can be obtained in the following manner.

The paraffinic fluid of the invention can be obtained starting from used biological feedstock, also called used biomass or used material of biological origin, in particular from used cooking oil(s).

The used cooking oil can be selected from used vegetable oils, used animal fats, used fish oils and mixtures thereof.

Preferably, the used cooking oil is selected from used vegetable oil. Among vegetable oils, mention may be made of tallow oil, colza oil, sunflower oil, soya oil, flax oil, olive oil, palm oil, castor oil, wood oil, corn oil, squash oil, rapeseed oil, soybean oil, jojoba oil, sesame oil, walnut oil, hazelnut oil, almond oil, shea oil, macadamia oil, cotton oil, alfalfa oil, rye oil, safflower oil, peanut oil, coconut oil and copra oil, and mixtures thereof. Preferably, the vegetable oil is selected from rapeseed oil, soybean oil, sunflower oil, palm oil, coconut oil, peanut oil, castor oil, and mixtures thereof.

More specifically, the fluid of the invention can be obtained by a process comprising the following steps:
- hydrodeoxygenating (HDO) and hydroisomerizing (ISO) a used biomass, preferably a used cooking oil, in order to obtain a hydrodeoxygenated and hydroisomerized biomass, preferably used biomass, more preferably used cooking oil, and
- catalytically hydrogenating the hydrodeoxygenated and hydroisomerized biomass preferably at a temperature from 80 to 180°C, at a pressure from 50 to 160 bars, a liquid hourly space velocity of 0.2 to 5 hr⁻¹ and an hydrogen treat rate up to 200 Nm³/ton of feed (the feed being the hydrodeoxygenated and hydroisomerized biomass).

The hydrodeoxygenation step (HDO) leads to decomposition of the structures of biological esters or triglyceride constituents, to removal of oxygenated, phosphorus- and sulfur-containing compounds, and to hydrogenation of olefinic bonds. This hydrodeoxygenation step (HDO) of the used material of biological origin is followed by isomerization of the product obtained, leading to branching of the hydrocarbon chain and to improved properties of paraffin at low temperature. A fractionating step can preferably follow after the hydrodeoxygenation and isomerization steps. Advantageously, the fractions of interest are then subjected to hydrotreatment and distillation steps to obtain the desired specifications of the fluid of the invention.

This HDO/ISO process is implemented on biological feedstock, preferably used biological feedstock, also called used biomass or used material of biological origin.

The biological feedstock is preferably selected from vegetable oils, animal fats, fish oils and mixtures thereof.

At the HDO step, hydrogen and the used material of biological origin are passed over a hydrodeoxygenation catalytic bed simultaneously, in the same direction or in counter-current. At the HDO step, the pressure and temperature are respectively between 20 and 150 bar and between 200 and 500°C. Known, conventional hydrodeoxygenation catalysts are used for this step. Optionally, the used material of biological origin, before the HDO step, can be subjected to pre-hydrogenation under mild conditions to prevent secondary reactions of double bonds.

The product resulting from the hydrodeoxygenation reaction is subjected to an isomerization step (ISO) at which hydrogen and said product, and optionally a mixture of n-paraffins, are passed over isomerization catalytic beds simultaneously, in the same direction or in counter current. At the ISO step, the pressure and temperature are respectively between 20 and 150 bar and between 200 and 500°C. Known, conventional isomerization catalysts are used at this step.

Additionally, secondary processes can also be applied (e.g. intermediate mixing, scavenging or the like).

The product resulting from the HDO/ISO steps can optionally be fractionated to obtain the fractions of interest.

Various HDO/ISO processes are described in the literature. Application WO 2014/033762 describes a process comprising a pre-hydrogenation step, a hydrodeoxygenation step (HDO) and an isomerization step conducted in counter current flow. Patent application EP 1728844 describes a method for producing hydrocarbon compounds from a mixture of compounds of vegetable and animal origin. This method comprises a pre-treatment step of the mixture to remove contaminants, e.g. alkali metal salts, followed by a hydrodeoxygenation step (HDO) an isomerization step. Patent application EP 2084245 describes a method for producing a hydrocarbon mixture, which can be used as diesel oil or in a diesel oil composition, via hydrodeoxygenation of a mixture of biological origin containing fatty acid esters optionally in a mixture with free fatty acids, for example vegetable oils such as sunflower seed oil, rapeseed oil, canola oil, palm oil or pine oil, followed by hydroisomerization on specific catalysts. Patent application EP 2368967 describes said method and the product obtained with this method.

Advantageously, the material of biological origin, in particular the used material of biological origin, contains less than 15 ppm of sulfur, preferably less than 8 ppm, more preferably less than 5 ppm and further preferably less than 1 ppm in accordance with standard ASTM D5453. Ideally, the used material of biosourced origin used as feedstock does not contain sulfur.

Before the catalytic hydrogenation step, a pre-fractionating step can be performed. A narrower-cut fraction fed into the hydrogenation unit allows a narrow-cut fraction to be obtained on leaving the unit. The boiling points of pre-fractionated fractions are between 150 and 330°C whilst fractions which have not been pre-fractionated typically have boiling points between 100 and 360°C.

The deoxygenated, isomerized feedstock derived from the HDO/ISO process is hydrogenated. The hydrogen used in the hydrogenation unit is typically highly purified hydrogen. By highly purified hydrogen it is meant hydrogen having purity higher than 99 % for example, even if other grades could also be used.

The hydrogenation step is conducted by means of catalysts. Standard hydrogenation catalysts can either be bulk or supported, and may comprise the following metals: nickel, platinum, palladium, rhenium, rhodium, nickel tungstate, nickel-molybdenum, molybdenum, cobalt-molybdenum. The supports can be silica, alumina, silica-alumina or zeolites.

One preferred catalyst is a nickel-based catalyst on an alumina support having a specific surface area which varies between 100 and 200 m2/g of catalyst, or a bulk nickel catalyst. Conditions for hydrogenation are typically the following:
- Pressure: 50 to 160 bar, preferably 80 to 150 bar and more preferably 90 to 120 bar;
- Temperature: 80 to 180°C, preferably 120 to 160°C and more preferably 150 to 160°C;
- Liquid Hourly space velocity (LHSV): 0.2 to 5 hr⁻¹, preferably 0.4 to 3 hr⁻¹ and more preferably 0.5 to 0.8 hr-1;
- Hydrogen treatment rate: adapted to the above-mentioned conditions and possibly reaching 200 Nm³/tonnes of feedstock to be treated.

The temperature in the reactors is typically between 150 and 160°C with a pressure of about 100 bar, whilst the liquid hourly space velocity is about 0.6 hr⁻¹ with a treatment rate adapted as a function of the quality of the feedstock to be treated and the parameters of the first hydrogenation reactor.

Hydrogenation can also take place in one or more reactors in series. The reactors may comprise one or more catalytic beds. The catalytic beds are generally fixed catalytic beds.

The hydrogenation process is preferably carried out in two or three reactors, preferably in three reactors and more preferably in three reactors in series.

The first reactor is used for scavenging of sulfur-containing compounds and hydrogenation of essentially all unsaturated compounds and up to about 90 % of aromatic compounds. The product leaving the first reactor contains substantially no sulfur-containing compound. At the second stage i.e. in the second reactor hydrogen of the aromatics is continued and up to 99 % of aromatics are thereby hydrogenated.

The third stage in the third reactor is a finishing stage allowing contents of aromatics to be obtained of 600 ppm or less, preferably 500 ppm or less, more preferably 300 ppm or less and further preferably 100 ppm or less, and ideally equal to or less than 80 ppm.

It is possible to use a reactor comprising two, three or more catalytic beds. The catalysts can be in variable amounts possibly being different or essentially the same in each reactor; for three reactors, the amounts as a function of weight can be 0.05-0.5/0.10-0.70/0.25-0.85 for example, preferably 0.07-0.25/0.15-0.35/0.4-0.78 and more preferably 0.10-0.20/0.20-0.32/0.48-0.70.

It is also possible to use one or two hydrogenation reactors instead of three.

It is also possible that the first reactor is composed of twin reactors used alternately. This operating mode particularly allows facilitated loading and unloading of catalysts: when the first reactor comprises the catalyst that is first saturated (substantially all the sulfur is trapped on and/in the catalyst), this catalyst must be changed often.

A single reactor can also be used in which two, three or more catalytic beds are installed.

It may be necessary to insert quench boxes (to stifle the reaction) in the recycle system or between the reactors to cool the effluents from one reactor to another or from one catalytic bed to another, to control the temperatures and hydrothermal balance of each reaction. In one preferred embodiment, there are no cooling or quenching intermediates.

In one embodiment, the product resulting from the process and/or the separated gas(s) are at least partly recycled back into the feed system of the hydrogenation reactors. This dilution contributes towards maintaining the exothermicity of the reaction within controlled limits, in particular at the first stage. In addition, recycling allows heat exchange before the reaction and additionally better control over temperature.

The effluent from the hydrogenation unit chiefly contains the hydrogenated product and hydrogen. Flash separators are used to separate the effluents into a gas phase, mainly residual hydrogen, and a liquid phase mainly hydrogenated hydrocarbon fractions. This process can be carried out using three flash separators, one at high pressure, one at intermediate pressure and one at low pressure very close to atmospheric pressure.

The gaseous hydrogen collected data the top of the flash separators can be recycled back to the feed system of the hydrogenation unit, or to different stages in the hydrogenation units between the reactors.

In one embodiment, the end product is separated at atmospheric pressure. It is then fed directly into a vacuum fractionating unit. Preferably, fractionation is performed at a pressure of between 10 and 50 bar, and more preferably at about 30 bar.

Fractionation can be performed so that it is possible simultaneously to withdraw various hydrocarbon fluids from the fractionating column, and so that their boiling point is able to be predetermined.

By adapting the feedstock via the initial and final boiling points thereof, the hydrogenation reactors, separators and fractionating unit can therefore be directly connected without the need for intermediate vessels. This continuity between hydrogenation and fractionation allows optimised thermal integration associated with a reduction in the number items of equipment together with energy savings.

The fluid of the invention is advantageously a hydrocarbon fraction having an initial boiling point in the range of 180°C to 240°C, preferably 190°C to 230°.C and more preferably 200°C to 220°C, and a final boiling point in the range of 240°C to 300°C, preferably 240°C to 280°C. Preferably, the difference between the final boiling point and initial boiling point is from 5°C to 80°C, preferably from 10°C to 60°C, more preferably from 20°C to 40°C. The hydrocarbon oil may comprise one or more fractions having distillation ranges lying within the above ranges.

According to an embodiment, the process for manufacturing the paraffinic fluid of the invention comprises the following steps:
i. hydrodeoxygenating (HDO) and hydroisomerizing (ISO) a used cooking oil in order to obtain a hydrodeoxygenated and hydroisomerized used cooking oil comprising from 60 to 95%wt of isoparaffins based on the total weight of the hydrodeoxygenated and hydroisomerized used cooking oil, said hydrodeoxygenated and hydroisomerized used cooking oil preferably comprising from 5 to 40%wt of n-paraffins based on the total weight of the hydrodeoxygenated and hydroisomerized used cooking oil,
ii. catalytically hydrogenating the hydrodeoxygenated and hydroisomerized used cooking oil at a temperature from 80 to 180°C, at a pressure from 50 to 160 bars, a liquid hourly space velocity of 0.2 to 5 hr-1 and an hydrogen treat rate up to 200 Nm3/ton of feed (the feed being the hydrodeoxygenated and hydroisomerized used cooking oil) in order to reduce the aromatic content of the hydrodeoxygenated and hydroisomerized used cooking oil in such a manner that the aromatic content is less than 500 ppm, and

- fractioning step performed between step i) and step ii) and/or after step ii) in order to obtain a cut having an initial boiling point and a final boiling point in the range from 100°C to 250°C, preferably from 120 to 220°C.

### Alcohol(s)

The composition of the invention comprises at least one alcohol.

Preferably, the alcohol(s) has(have) from 4 to 18 carbon atoms, preferably from 5 to 12 carbon atoms.

Preferably, the alcohol(s) is(are) selected from aliphatic monoalcohol(s).

According to a particular embodiment, the alcohol(s) is(are) selected from aliphatic monoalcohol(s) having from 4 to 18 carbon atoms, preferably from 5 to 12 carbon atoms.

According to an embodiment, the alcohols are selected from pentanol, hexanol, heptanol, octanol nonanol, decanol, and mixtures thereof, preferably from n-heptanol, 2-octanol, and mixtures thereof.

Typically, the alcohol(s) represent(s) from 1 to 30%vol, preferably from 5 to 15%vol of the total volume of the composition.

Typically, the alcohol used in the invention is derived from biological origin.

The alcohols that can be used in the invention may be commercially available or prepared according to methods well known for the skilled person.

### Composition

The composition of the invention comprises a paraffinic fluid and at least one alcohol, the paraffinic fluid comprising, based on the total weight of the paraffinic fluid, at least 90% by weight of paraffinic compounds and a weight ratio isoparaffins/n-paraffins of at least 2.

Preferably, the composition comprises:
- from 70 to 99%vol, preferably from 85 to 95%vol, of a paraffinic fluid, and
- from 1 to 30%vol, preferably from 5 to 15%vol, of alcohol(s),
based on the total volume of the composition.

The composition of the invention has a content of biocarbon of at least 90%wt based on the total weight of the carbon atoms of the composition, preferably of at least 95%wt, or of at least 98%wt or even of 100%.

According to a preferred embodiment, the composition of the invention has a final boiling point below 250°C, preferably an initial boiling point and a final boiling point in the range from 100°C to 250°C, more preferably from 120 to 220°C.

Preferably, the composition comprises:
- from 70 to 99%vol, preferably from 85 to 95%vol, of a paraffinic fluid, and
- from 1 to 30%vol, preferably from 5 to 15%vol, of alcohol(s) having from 4 to 18 carbon atoms, preferably from 5 to 12 carbon atoms,
based on the total volume of the composition.

Preferably, the composition comprises:
- from 70 to 99%vol, preferably from 85 to 95%vol, of a paraffinic fluid, and
- from 1 to 30%vol, preferably from 5 to 15%vol, of alcohol(s) selected from aliphatic monoalcohol(s) having from 4 to 18 carbon atoms, preferably from 5 to 12 carbon atoms,
based on the total volume of the composition.

According to a particular embodiment, the composition has an aniline point of at least 30°C, preferably at least 45°C, more preferably from 50°C to 80°C.

The aniline point can be measured according to ASTM D611.

According to a particularly preferred embodiment, the composition of the invention has an initial boiling point and a final boiling point in the range from 120°C to 220°C and comprises:
- from 70 to 99%vol, preferably from 85 to 95%vol, of a paraffinic fluid, and
- from 1 to 30%vol, preferably from 5 to 15%vol, of alcohol(s),
based on the total volume of the composition,

the paraffinic fluid having an initial boiling point and a final boiling point in the range from 120°C to 220°C and comprising:
- From 60 to 95%wt, preferably from 70 to 90%wt, of isoparaffins,
- From 5 to 40%wt, preferably from 10 to 30%wt, of n-paraffins,
based on the total weight of the paraffinic fluid.

According to a particularly preferred embodiment, the composition of the invention has an initial boiling point and a final boiling point in the range from 120°C to 220°C and comprises:
- from 70 to 99%vol, preferably from 85 to 95%vol, of a paraffinic fluid, and
- from 1 to 30%vol, preferably from 5 to 15%vol, of alcohol(s) selected from aliphatic monoalcohol(s) having from 4 to 18 carbon atoms, preferably from 5 to 12 carbon atoms,

based on the total volume of the composition,
   the paraffinic fluid having an initial boiling point and a final boiling point in the range from 120°C to 220°C and comprising:
   - From 60 to 95%wt, preferably from 70 to 90%wt, of isoparaffins,
   - From 5 to 40%wt, preferably from 10 to 30%wt, of n-paraffins,
based on the total weight of the paraffinic fluid.

According to a particularly preferred embodiment, the composition of the invention has an initial boiling point and a final boiling point in the range from 120°C to 220°C and comprises:
- from 85 to 95%vol, of a paraffinic fluid, and
- from 5 to 15%vol, of alcohol(s) selected from aliphatic monoalcohol(s) having from 4 to 18 carbon atoms, preferably from 5 to 12 carbon atoms,

based on the total volume of the composition,
   the paraffinic fluid having an initial boiling point and a final boiling point in the range from 120°C to 220°C and comprising:
   - from 70 to 90%wt, of isoparaffins,
   - from 10 to 30%wt, of n-paraffins,
based on the total weight of the paraffinic fluid.

The composition of the invention can be prepared by the following process:
- hydrodeoxygenating and hydroisomerizing a used biomass, preferably a used cooking oil, in order to obtain a hydrodeoxygenated and hydroisomerized used biomass, preferably a hydrodeoxygenated and hydroisomerized used cooking oil,
- catalytically hydrogenating the hydrodeoxygenated and hydroisomerized used biomass preferably at a temperature from 80 to 180°C, at a pressure from 50 to 160 bars, a liquid hourly space velocity of 0.2 to 5 hr-1 and an hydrogen treat rate up to 200 Nm3/ton of feed, to obtain a paraffinic fluid,
- mixing the paraffinic fluid with at least one alcohol.

According to a preferred embodiment, the used biomass is a used cooking oil more preferably selected from used vegetable oils, used animal fats, used fish oils, and mixtures thereof, preferably from used vegetable oils, preferably the used cooking oil is chosen among rapeseed oil, canola oil, colza oil, tall oil, sunflower oil, soybean oil, hemp oil, olive oil, linenseed oil, mustard oil, palm oil, arachis oil, castor oil, coconut oil, animal fats such as suet, tallow, blubber, recycled alimentary fats and a mixture threof.

### Applications

The composition of the invention can be used as a solvent for adhesive and/or sealants applications.

Indeed, the composition of the invention has suitable solvency performances for their use as a solvent for adhesive and/or sealants applications.

The present invention is also directed to the use of an alcohol in order to improve the solvency power of a composition comprising a paraffinic fluid,
the composition having a content of biocarbon of at least 90%wt based on the total weight of the carbon atoms of the composition,
the paraffinic fluid having an initial boiling point and a final boiling point below 250°C and comprising, based on the total weight of the paraffinic fluid, at least 90% by weight of paraffinic compounds and a weight ratio isoparaffins/n-paraffins of at least 2.

The present invention is also directed to a process of improving solvency of a composition comprising a paraffinic fluid,
the composition having a content of biocarbon of at least 90%wt based on the total weight of the carbon atoms of the composition,
the paraffinic fluid having an initial boiling point and a final boiling point below 250°C and comprising, based on the total weight of the paraffinic fluid, at least 90% by weight of paraffinic compounds and a weight ratio isoparaffins/n-paraffins of at least 2.

Typically, the composition comprising the alcohol and the paraffinic fluid recovered at the end of the process has an improved solvency property.

Preferably, the alcohol and/or the paraffic fluid involved in the process defined above has one or more of the features defined in the context of the composition of the invention and of the use of the composition.

Also, the resulting composition obtained at the end of processes of the invention has preferably one or more of the features defined in the context of the composition of the invention and of the use of the composition.

Also, the invention is directed to a method for preparing a sealant, the method comprising contacting a composition comprising a paraffinic fluid with one or more sealant additives,
the composition having a content of biocarbon of at least 90%wt based on the total weight of the carbon atoms of the composition,
the paraffinic fluid having an initial boiling point and a final boiling point below 250°C and comprising, based on the total weight of the paraffinic fluid, at least 90% by weight of paraffinic compounds and a weight ratio isoparaffins/n-paraffins of at least 2.

Also, the invention is directed to a method for preparing an adhesive, the method comprising contacting a composition comprising a paraffinic fluid with one or more adhesive additives,
the composition having a content of biocarbon of at least 90%wt based on the total weight of the carbon atoms of the composition,
the paraffinic fluid having an initial boiling point and a final boiling point below 250°C and comprising, based on the total weight of the paraffinic fluid, at least 90% by weight of paraffinic compounds and a weight ratio isoparaffins/n-paraffins of at least 2.

Preferably, the composition involved in the methods defined above has one or more of the features defined in the context of the composition of the invention and of the use of the composition. Sealant additives and adhesive additives can be any components (different from the solvent) typically used respectively in sealant and adhesives compositions.

The following example illustrates the invention without limiting it.

### EXAMPLES

The invention is now described with the help of the following examples, which are not intended to limit the scope of the present invention, but are incorporated to illustrate advantages of the present invention and best mode to perform it.

### Example 1: Description of a paraffinic fluid

Table 1 shows the physicochemical properties of a paraffinic fluid of the invention.

The paraffinic fluid were prepared by hydrogenating a HDO/ISO used cooking oil. Hydrogenation was performed at a temperature of 150-160°C, pressure of 100 bar and liquid hourly space velocity of 0.6h⁻¹. The catalyst used for hydrogenation was nickel-on-alumina.

Distillation was carried out after the hydrogenation step to recover the fraction of interest.

**Table 1**

| Characteristics | Paraffinic fluid |
|---|---|
| Aromatics (ppm) | < 20 |
| Sulfur (ppm) | <1 |
| % isoparaffins (w/w) | 78 |
| % n-paraffins (w/w) | 22 |
| % naphthenes (w/w) | 0 |
| C8 (iso) | 5.2 |
| C9 (iso) | 24.5 |
| C10 (iso) | 38.5 |
| C11 (iso) | 26.6 |
| C12 (iso) | 4.8 |
| C13 (iso) | 0 |
| C14 (iso) | 0 |
| C15 (iso) | 0 |
| C16+ (iso) | 0 |
| Quantity of carbon of biological origin (%) | 100 |
| Initial boiling point (°C) | 141 |
| Final boiling point (°C) | 182 |
| OECD Biodegradability (28-day) (%) | >60% |
| Density at 15°C (kg/m³) | 0.7347 |
| Flash point (°C) | 28.5 |
| Kinematic viscosity at 40°C (cSt) | 0.845 |
| Pour point (°C) | -90 |
| Aniline point (°C) | 74.4 |

The following standards and methods were used to measuring the above properties:

| | |
|---|---|
| - Density at 15°C | ASTM D4052 |
| - Pour point | ASTM D97 |
| - Flash point | ASTM D93 |
| - Viscosity at 40°C | ASTM D445 |
| - Aromatic content | UV spectroscopy |
| - Atmospheric distillation | ASTM D86 |
| - Aniline point | ASTM D611 |

### Example 2: Compositions of the invention

Two compositions of the invention were prepared by mixing the paraffinic fluid detailed in Example 1 with an alcohol, either n-heptanol or 2-octanol. The resulting composition comprises 90%vol of the paraffinic fluid and 10%vol of the alcohol.

Physicochemical properties of the composition are detailed in Table 2.

| **Properties** | **Method** | **Units** | **90%vol paraffinic fluid + 10%vol n-heptanol** | **90%vol paraffinic fluid + 10%vol 2-octanol** |
|---|---|---|---|---|
| Appearance | Visual | - | Colourless Liquid | Colourless Liquid |
| Density at 15°C | ASTM D4052 | kg/m3 | 742,68 | 741,71 |
| Pensky Martens Close Cup | ASTM D93 | °C | <40 | <40 |
| Aniline Point | ASTMD 611 | °C | 59,4 | 61 |
| Colour | ASTM D1500 | | 0 | 0 |
| Pour Point | ASTM D97 | °C | | |
| Refractive Index at 20°C | ASTM D1218 | - | 1,41173 | 1,41169 |
| Atmospheric Distillation | ASTM D86 | | | |
| Initial Boiling Point (IBP) | ASTM D86 | °C | 136 | 138 |
| 5% | ASTM D86 | °C | 143 | 145 |
| 10% | ASTM D86 | °C | 144 | 147 |
| 20% | ASTM D86 | °C | 146 | 148 |
| 30% | ASTM D86 | °C | 148 | 150 |
| 40% | ASTM D86 | °C | 151 | 153 |
| 50% | ASTM D86 | °C | 153 | 155 |
| 60% | ASTM D86 | °C | 156 | 158 |
| 70% | ASTM D86 | °C | 158 | 162 |
| 80% | ASTM D86 | °C | 162 | 165 |
| 90% | ASTM D86 | °C | 167 | 170 |
| 95% | ASTM D86 | °C | 172 | 174 |
| Final Boiling Point (FBP) | ASTM D86 | °C | 184 | 188 |

As shown in the above table 2, the compositions of the invention have suitable solvency properties.

## Claims

1. Use of a composition as a solvent for adhesives and/or sealants, the composition comprising a paraffinic fluid and at least one alcohol, the composition having a content of biocarbon of at least 90%wt based on the total weight of the carbon atoms of the composition,
the paraffinic fluid comprising, based on the total weight of the paraffinic fluid, at least 90% by weight of paraffinic compounds and having a weight ratio isoparaffins/n-paraffins of at least 2.

2. Use according to claim 1, wherein the composition comprises:
- from 70 to 99%vol, preferably from 85 to 95%vol, of a paraffinic fluid, and
- from 1 to 30%vol, preferably from 5 to 15%vol, of alcohol(s),
based on the total volume of the composition.

3. Use according to claim 1 or 2, wherein the alcohol has from 4 to 18 carbon atoms, preferably from 5 to 12 carbon atoms and/or the alcohol(s) is(are) selected from aliphatic monoalcohol(s).

4. Use according to any one of claims 1 to 3, wherein the alcohols are selected from pentanol, hexanol, heptanol, octanol nonanol, decanol, and mixtures thereof, preferably from n-heptanol, 2-octanol, and mixtures thereof.

5. Use according to any one of claims 1 to 4, wherein the paraffinic fluid has an initial boiling point and a final boiling point in the range from 100°C to 250°C, preferably from 120 to 220°C.

6. Use according to any one of claims 1 to 5, wherein the paraffinic fluid comprises:
- From 60 to 95%wt, preferably from 70 to 90%wt, of isoparaffins,
- From 5 to 40%wt, preferably from 10 to 30%wt, of n-paraffins,
based on the total weight of the paraffinic fluid.

7. Use according to any one of claims 1 to 6, wherein the composition has a final boiling point below 250°C, preferably an initial boiling point and a final boiling point in the range from 100°C to 250°C, preferably from 120 to 220°C.

8. Use according to any one of claims 1 to 7, wherein the composition has an aniline point of at least 30°C, preferably at least 45°C, more preferably from 50°C to 80°C.

9. Use according to any one of claims 1 to 8, wherein the composition has an initial boiling point and a final boiling point in the range from 120°C to 220°C and comprises:
- from 85 to 95%vol, of a paraffinic fluid, and
- from 5 to 15%vol, of alcohol(s),
based on the total volume of the composition,
the paraffinic fluid having an initial boiling point and a final boiling point in the range from 120°C to 220°C and comprising:
- from 70 to 90%wt of isoparaffins,
- from 10 to 30%wt of n-paraffins,
- Less than 1%wt of naphthens,
- Less than 500 ppm by weight of aromatics,
based on the total weight of the paraffinic fluid.

10. A composition having a final boiling point below 250°C and comprising:
- from 70 to 99%vol, preferably from 85 to 95%vol, of a paraffinic fluid, and
- from 1 to 30%vol, preferably from 5 to 15%vol, of alcohol(s),
based on the total volume of the composition,
the composition having a content of biocarbon of at least 90%wt based on the total weight of the carbon atoms of the composition,
the paraffinic fluid comprising, based on the total weight of the paraffinic fluid, at least 90% by weight of paraffinic compounds and having a weight ratio isoparaffins/n-paraffins of at least 2.

11. The composition according to 10, wherein the paraffinic fluid has one or more of the following features:
- the paraffinic fluid comprises:
- From 60 to 95%wt, preferably from 70 to 90%wt, of isoparaffins,
- From 5 to 40%wt, preferably from 10 to 30%wt, of n-paraffins,
based on the total weight of the paraffinic fluid, and/or
- the paraffinic fluid has an initial boiling point and a final boiling point in the range from 100°C to 250°C, preferably from 120 to 220°C.

12. The composition according to 10 or 11, wherein the alcohol(s) has(have) from 4 to 18 carbon atoms, preferably from 5 to 12 carbon atoms and/or the alcohol(s) is(are) selected from aliphatic monoalcohol(s).

13. The composition according to any one of claims 10 to 12, wherein the alcohols are selected from pentanol, hexanol, heptanol, octanol nonanol, decanol, and mixtures thereof, preferably from n-heptanol, 2-octanol, and mixtures thereof.

14. The composition according to any one of claims 10 to 13, wherein the composition has one or more of the following features:
- the composition has an aniline point of at least 30°C, preferably at least 45°C, more preferably from 50°C to 80°C, and/or
- the composition has an initial boiling point and a final boiling point in the range from 100°C to 250°C, preferably from 120 to 220°C, and/or
- the composition has an initial boiling point and a final boiling point in the range from 120°C to 220°C and comprises:
- from 85 to 95%vol, of a paraffinic fluid, and
- from 5 to 15%vol, of alcohol(s),
based on the total volume of the composition,
the paraffinic fluid having an initial boiling point and a final boiling point in the range from 120°C to 220°C and comprising:
- from 70 to 90%wt of isoparaffins,
- from 10 to 30%wt of n-paraffins,
- Less than 1%wt of naphthens,
- Less than 500 ppm by weight of aromatics,
based on the total weight of the paraffinic fluid.

15. A process for preparing the composition according to any one of claims 10 to 14, the process comprising the steps of:
- hydrodeoxygenating and hydroisomerizing a used biomass, preferably a used cooking oil, in order to obtain a hydrodeoxygenated and hydroisomerized used biomass, preferably a hydrodeoxygenated and hydroisomerized used cooking oil,
- catalytically hydrogenating the hydrodeoxygenated and hydroisomerized used biomass preferably at a temperature from 80 to 180°C, at a pressure from 50 to 160 bars, a liquid hourly space velocity of 0.2 to 5 hr⁻¹ and an hydrogen treat rate up to 200 Nm³/ton of feed, to obtain a paraffinic fluid,
- mixing the paraffinic fluid with at least one alcohol,
process wherein preferably the used biomass is a used cooking oil more preferably selected from used vegetable oils, used animal fats, used fish oils, and mixtures thereof, preferably from used vegetable oils, preferably the used cooking oil is chosen among rapeseed oil, canola oil, colza oil, tall oil, sunflower oil, soybean oil, hemp oil, olive oil, linenseed oil, mustard oil, palm oil, arachis oil, castor oil, coconut oil, animal fats such as suet, tallow, blubber, recycled alimentary fats and a mixture threof.
